# EUROPÄISCHE PATENTSCHRIFT

(11) **EP 2 387 456 B1**
(45) Veröffentlichungstag und Bekanntmachung des Hinweises auf die Patenterteilung: **21.02.2018**
(21) Anmeldenummer: 09795975.3
(22) Anmeldetag: 17.12.2009
(51) Int. Cl.: B01J 2/00

(54) **VERFAHREN ZUR MODIFIZIERUNG DER OBERFLÄCHE VON PARTIKELN UND HIERZU GEEIGNETE VORRICHTUNG**
METHOD FOR MODIFYING THE SURFACE OF PARTICLES AND DEVICE SUITABLE FOR THE SAME
PROCÉDÉ POUR MODIFIER LA SURFACE DE PARTICULES ET DISPOSITIF CORRESPONDANT

(30) Priorität: 15.01.2009 DE 102009000259
(43) Veröffentlichungstag der Anmeldung: 23.11.2011
(73) Patentinhaber: Fraunhofer-Gesellschaft zur Förderung der angewandten Forschung e.V., 80686 München (DE)
(72) Erfinder: IHDE, Jörg, 28865 Lilienthal (DE); LOMMATZSCH, Uwe, 28279 Bremen (DE); KOLACYAK, Daniel, 72770 Teutlingen (DE); DEGENHARDT, Jost, 28719 Bremen (DE)
(74) Vertreter: Hoffmann Eitle
(86) Internationale Anmeldenummer: PCT/EP2009/067407
(87) Internationale Veröffentlichungsnummer: WO 2010/081610

(56) Entgegenhaltungen:
- EP-A2- 1 702 690
- WO-A2-2005/003405
- DE-A1-102005 042 109
- US-A1- 2004 265 615
- US-A1- 2008 202 288

## Beschreibung

### GEBIET DER ERFINDUNG

Die vorliegende Erfindung betrifft ein Verfahren zur Modifizierung der Oberfläche von Partikeln, insbesondere Mikro- und Nanopartikeln, das kostengünstig ist, sicher und einfach durchgeführt werden kann, eine unproblematische Modifikation von Eigenschaften der Partikel, beispielsweise des Kontaktwinkels zu Wasser, ermöglicht und als zyklisches Verfahren durchgeführt werden kann, das die nahezu vollständige Modifizierung der eingesetzten Partikel erlaubt. Gemäß einem zweiten Aspekt betrifft die Erfindung eine Vorrichtung, die für die Durchführung des erfindungsgemäßen Verfahrens besonders geeignet und dafür angepasst ist.

### STAND DER TECHNIK

Mikro- und Nanopartikel finden seit einigen Jahren Einsatz in verschiedensten Gebieten, um die Eigenschaften von Produkten zu modifizieren. Hier können beispielhaft Farben, Lacke, Klebstoffe, pharmazeutische Produkte und Kunststoffe genannt werden. Durch die Inkorporierung der Partikel können physikalische Eigenschaften der Produkte verbessert, beispielsweise die Festigkeit oder die elektrische Leitfähigkeit erhöht werden. Für die wirksame Einbindung der Mikro- und Nanopartikel in die diversen Matrizes ist es von Vorteil, die Partikel zu modifizieren, sie beispielsweise mit funktionellen Gruppen zu versehen, durch die eine kovalente Anbindung der Partikel an die Matrix erfolgen kann. Ferner kann die Oberflächenmodifizierung der Partikel die Eigenschaften der Produkte verändern, in die die Partikel inkorporiert werden.

Die Plasmatechnik erwies sich als ein geeignetes Verfahren zur Veränderung der Oberflächeneigenschaften von Partikeln. Lange Zeit galt die Partikelbehandlung im Niederdruckplasma in Fließbettreaktoren als Methode der Wahl für die Modifizierung der Oberflächeneigenschaften von Partikeln. Die Niederdruckplasmaverfahren erfordern indessen eine ausgefeilte Vakuumtechnik, was sie aufwändig macht und zu hohen Investitionskosten führt. Die Partikelbehandlung im Atmosphärendruckplasma kann diesen Nachteil vermeiden.

Die WO 2007/028798 betrifft ein Verfahren zum Beschichten von Metallpulvern, bei dem eine Atmosphärendruck-Plasmaquelle verwendet werden kann. Die Dispergierung der zu beschichtenden Metallpulver erfolgt dabei durch das Hindurchblasen eines Gases. Wie sich zeigte, ist das Verfahren der WO 2007/028798 daher nicht ohne Weiteres zur Beschichtung von sehr kleinen Partikeln, insbesondere Nanopartikeln, geeignet, denn diese lassen sich nicht vollständig oder nur mit großem Aufwand trocken dispergieren.

Die EP-A-1 702 690 versucht hier Abhilfe zu schaffen. Bei dem dort beschriebenen Verfahren zur Beschichtung von Nano- und Mikropartikeln werden die Partikel in einem verflüssigten Gas oder in einem überkritischen Fluid dispergiert und die flüssige Dispersion so in ein Plasma geleitet, dass es erst im Plasma zum Verdampfen der Flüssigkeit kommt. Bei den verflüssigten Gasen kann es sich um inerte Gase, wie beispielsweise Edelgase, oder auch um reaktive Gase, wie beispielsweise Sauerstoff oder Chlor handeln. Als Beispiel der alternativ einsetzbaren überkritischen Fluide wird Kohlendioxid genannt. Im Plasma, bei dem es sich um ein Atmosphärendruckplasma handeln kann, wird dann die Oberfläche der Partikel modifiziert. Durch das Verdampfen der Flüssigkeit der flüssigen Dispersion erst im Plasma werden angeblich die oben beschriebenen Nachteile bei der trockenen Dispergierung sehr kleiner Partikel vermieden. Nach der Lehre der EP-A-1 702 690 trifft der Flüssigkeitsstrahl, also die Dispersion der Partikel in dem flüssigen Gas oder überkritischen Fluid direkt auf das aktive Plasma. Daher sollen die Elektroden durch Anblasen mit einem Gas vor Kontamination geschützt werden. Aufgrund der Verwendung verflüssigter Gase oder überkritischer Fluide ist das Verfahren der EP-A-1 702 690 energieaufwändig und stellt hohe apparatetechnische Anforderungen, beispielsweise an die Isolation. Daher ist es vergleichsweise kostenintensiv. In der EP-A-1 702 690 wird das Auffangen der im Atmosphärendruckplasma behandelten Partikel in einem Filter oder Zyklon und die Anreicherung der Partikel in einer Flüssigkeit angesprochen. Eine konkrete Möglichkeit der Abtrennung der modifizierten von den nicht-modifizierten Partikeln wird jedoch nicht gelehrt, obwohl der prognostizierbare Anteil der nicht-modifizierten Partikel im Gasstrom nach dem Durchlaufen des Plasmas hoch ist.

Vor dem Hintergrund des oben beschriebenen Standes der Technik haben sich die Erfinder die Aufgabe gestellt, eine kostengünstige und verfahrenstechnisch einfache Methode zur Oberflächenmodifizierung von Partikeln bereitzustellen, die auch für sehr kleine Partikel wie Nanopartikel geeignet ist, die inlinefähig ist, also sich in bestehende Produktionsanlagen (beispielsweise für Funktionsmaterialien, die solche Partikel enthalten) gut integrieren lässt, und besonders einfach eine zuverlässige Modifikation von Eigenschaften der Partikel, beispielsweise der Dispergierbarkeit oder des Kontaktwinkels zu Wasser ermöglicht.

### ZUSAMMENFASSUNG DER ERFINDUNG

Diese Aufgabe wird erfindungsgemäß durch ein Verfahren zur Modifizierung der Oberfläche von Partikeln in einem Atmosphärendruckplasma gelöst, wie es im Hauptanspruch spezifiziert ist. Das Verfahren ist dadurch gekennzeichnet, dass die zu modifizierenden Partikel mit einer Hülle versehen werden, die aus mindestens einer Verbindung besteht, die bei Raumtemperatur und Atmosphärendruck flüssig ist. Die umhüllten Partikel werden anschließend einem vorzugsweise relaxierenden Atmosphärendruckplasma ausgesetzt, in dem ihre Oberfläche modifiziert wird. Dabei werden die Partikel dadurch mit der Hülle mit der mindestens einen Verbindung versehen, dass sie in der mindestens einen Verbindung dispergiert werden und die Dispersion unter Bildung der umhüllten Partikel zerstäubt wird. Die Zerstäubung der Dispersion erfolgt dabei beispielsweise mittels einer Strahlpumpe.

Bevorzugte Ausgestaltungen des erfindungsgemäßen Verfahrens sind Gegenstand der abhängigen Ansprüche.

Wie die Erfinder überraschend festgestellt haben, können durch die Wahl der Verbindung für die Umhüllung der Partikel, bei der es sich vorzugsweise um ein Lösungsmittel handelt, wichtige Eigenschaften der Partikel, wie beispielsweise die Dispergierbarkeit oder der Kontaktwinkel gezielt beeinflusst werden, auch wenn die übrigen Bedingungen im Atmosphärendruckplasma unverändert bleiben.

Das erfindungsgemäße Verfahren ermöglicht eine zyklische Prozessführung, durch die eingesetzte Partikel vollständig oder nahezu vollständig in modifizierte Partikel überführt werden können. Eine konkrete Ausgestaltung eines solchen zyklischen Prozesses ist Gegenstand des nebengeordneten Anspruchs 14.

In dem zyklischen Prozess gemäß Anspruch 14 erfolgt der Transport der umhüllten Partikel in Schritt (iii) und der oberflächenmodifizierten und nicht-oberflächenmodifizierten Partikel in Schritt (iv) gemäß einer bevorzugten Ausführungsform primär durch das Trägergas. Gemäß einer weiteren bevorzugten Ausführungsform des zyklischen Prozesses gemäß Anspruch 14 wird das Trägergas nach dem Durchtritt durch das Sedimentationslösungsmittel in Schritt (iv) zwecks Reinigung durch einen Gaswäscher 13 geleitet, wobei dem Gaswäscher vorzugsweise ein Zyklon 14 vorgeschaltet ist. Schließlich erfolgt in einer weiteren bevorzugten Ausgestaltung des zyklischen Prozesses gemäß Anspruch 14 die Dispergierung der Partikel in dem Dispersionsbehälter 9 in Schritt (i) unter Einwirkung von Ultraschall oder durch die Zugabe von Tensid. Kombinationen der genannten drei bevorzugten Ausführungsformen des zyklischen Prozesses sind ebenso umfasst.

Gemäß einem weiteren Aspekt betrifft die vorliegende Erfindung eine Vorrichtung, wie in Anspruch 15 angegeben, die zur Durchführung des erfindungsgemäßen Verfahrens besonders geeignet und dafür angepasst ist. Gemäß einer bevorzugten Ausführungsform weist die Vorrichtung ferner einen Sedimentationsbehälter auf, der mit dem Auslass der Reaktionskammer 16 in Verbindung steht und einen oberen Abfluss 11 und einen unteren Abfluss 12 aufweist, wobei der untere Abfluss 12 mit dem Dispersionsbehälter 9 in Verbindung steht.

### KURZE BESCHREIBUNG DER ZEICHNUNGEN

Fig. 1 ist eine schematische Darstellung einer zyklischen Ausgestaltung des erfindungsgemäßen Verfahrens.
Fig. 2 ist eine schematische Detailansicht einer bevorzugten Ausführungsform des Bereichs des Atmosphärendruckplasmas mit Atmosphärendruckplasmadüse und Zuleitung für Beschichtungsvorläuferverbindungen.
Fig. 3 zeigt ein Flussdiagramm für die Durchführung des erfindungsgemäßen zyklischen Prozesses zur Modifizierung der Oberfläche von Partikeln in einem Atmosphärendruckplasma.

### AUSFÜHRLICHE BESCHREIBUNG DER ERFINDUNG

Im erfindungsgemäßen Verfahren zur Modifizierung der Oberfläche von Partikeln werden die zu modifizierenden Partikel mit einer Hülle versehen, die aus mindestens einer Verbindung besteht, die bei Raumtemperatur und Atmosphärendruck flüssig ist. In der vorliegenden Beschreibung und den Patentansprüchen werden die mit einer solchen Hülle versehenen Partikel auch als "umhüllte Partikel" bezeichnet. Der Einfachheit halber wird die mindestens eine Verbindung, die bei Raumtemperatur und Atmosphärendruck flüssig ist, auch als "die flüssige Verbindung" bezeichnet. Die "Raumtemperatur" ist in der vorliegenden Anmeldung als 20°C definiert. Der "Atmosphärendruck" beträgt 101,325 kPa. Folglich liegt der Siedepunkt der flüssigen Verbindung bei Atmosphärendruck oberhalb der Raumtemperatur, also oberhalb von 20°C. Bevorzugt ist ihr Siedepunkt > 25°C, mehr bevorzugt > 30°C und am meisten bevorzugt > 40°C. Wie später dargelegt werden wird, kommt es in dem Atmosphärendruckplasma bzw. dem durch das Atmosphärendruckplasma erzeugten Reaktionsvolumen vorzugsweise zu einer Verdampfung der Hülle der flüssigen Verbindung. Um diese Verdampfung nicht unnötig zu erschweren, ist der Siedepunkt der flüssigen Verbindung bevorzugt < 300°C, mehr bevorzugt < 150°C.

Liegen mehrere flüssige Verbindungen vor, so sind diese vorzugsweise miteinander in den verwendeten Mengenanteilen vollständig mischbar. Die flüssige Verbindung ist nicht besonders beschränkt, so lange sie eine Hülle um die zu modifizierenden Partikel ausbilden kann. Beispielsweise kann die flüssige Verbindung ein Lösungsmittel oder eine ionische Flüssigkeit sein. Vorzugsweise ist die flüssige Verbindung ein Lösungsmittel. In diesem Fall kommt es also bei dem Schritt des erfindungsgemäßen Verfahrens, bei dem die Partikel mit einer Hülle der flüssigen Verbindung versehen werden, zur Ausbildung einer Solvathülle um die Partikel. Gemäß einer bevorzugten Ausführungsform ist das Lösungsmittel Wasser oder ein organisches Lösungsmittel, In der vorliegenden Anmeldung wird unter einer "ionischen Flüssigkeit" eine Flüssigkeit verstanden, die ausschließlich Ionen enthält. Es handelt sich also um flüssige Salze. Diese Salze sind vorzugsweise organische Salze. Als Beispiel für eine ionische Flüssigkeit kann 1-Butyl-3-Methylimidazolium-Hexafluorophosphat genannt werden.

Gemäß einer besonders bevorzugten Ausführungsform ist die flüssige Verbindung Wasser oder ein Alkohol. Der Alkohol ist beispielsweise ein niederer Alkohol, wie beispielsweise Methanol, Ethanol und Propanol, insbesondere Ethanol. Als weitere flüssige Verbindungen können Si-organische Lösungsmittel, Pyrrol, Pyridin, Benzoesäure, Acrylsäure, Methacrylsäure und Schwefelkohlenstoff (CS₂) genannt werden.

Die mit dem erfindungsgemäßen Verfahren zu modifizierenden Partikel sind hinsichtlich ihrer Größe und Form nicht weiter beschränkt. Vorzugsweise haben sie eine Korngröße von ≤ 1 mm. Insbesondere handelt es sich bevorzugt um Mikro- und/oder Nanopartikel. Gemäß einer besonders bevorzugten Ausführungsform handelt es sich um Nanopartikel, also um Partikel, deren Korngröße im Nanometerbereich liegt. Insbesondere haben diese Nanopartikel eine Korngröße (volumengemittelter Teilchendurchmesser) von 2 bis 100 nm. Gemäß einer besonders bevorzugten Ausführungsform haben die Partikel in mindestens einer Dimension Abmessungen, die im Nanometerbereich, insbesondere zwischen 2 und 100 nm liegen. Die Bestimmung der Korngröße von sehr kleinen Partikeln, wie Nanopartikeln, ist beispielsweise mit Laserstreungsverfahren oder Transmissionselektronenmikroskopie (TEM) möglich. Für größere Partikel stehen auch die Siebanalyse und Zentrifugationsverfahren zur Verfügung.

Der hier verwendete Begriff "Partikel" schließt sowohl einzelne Partikel als auch Agglomerate von mehreren Partikeln, die beispielsweise durch intermolekulare Wechselwirkungen zusammengehalten werden, ein.

Hinsichtlich der stofflichen Zusammensetzung sind die mit dem erfindungsgemäßen Verfahren zu modifizierenden Partikel nicht besonders beschränkt, so lange die Partikel in dem Atmosphärendruckplasma beständig sind, insbesondere durch das Plasma nicht vollständig zersetzt werden. Grundsätzlich kommen sämtliche anorganischen und organischen Partikel in Frage, die diese Voraussetzungen erfüllen. Geeignet sind insbesondere Oxide, beispielsweise Fe₂O₃, TiO₂, HfO₂, Al₂O₃, ZrO₂, ZnO, SiO₂, SnO₂ und Mischungen davon, Kohlenstoff und Pigmente. Bevorzugt handelt es sich bei den mit dem erfindungsgemäßen Verfahren zu modifizierenden Partikeln um Kohlenstoffpartikel oder Pigmente. Beispiele für Kohlenstoffpartikel sind Kohlenstoff-Nanoröhrchen (nanotubes), wie beispielsweise mehrwandige Kohlenstoff-Nanoröhrchen (multi-walled carbon nanotubes), sowie Fullerene. Pigmentpartikel, insbesondere für Farben und Lacke, vorzugsweise organische Pigmentpartikel für Farben und Lacke erwiesen sich ebenso als gut mit dem erfindungsgemäßen Verfahren modifizierbar.

Im erfindungsgemäßen Verfahren werden die umhüllten Partikel einem Atmosphärendruckplasma ausgesetzt, in dem ihre Oberfläche modifiziert wird. Konkret werden die umhüllten Partikel in eine Atmosphärendruckplasmazone bzw.ein durch ein Atmosphärendruckplasma erzeugtes Reaktionsvolumen transportiert und dort erfolgt die Modifikation der Oberfläche.

In der vorliegenden Anmeldung wird "Modifikation" so verstanden, dass sie die Funktionalisierung und die Beschichtung der Partikel einschließt. Bei der Funktionalisierung der Partikeloberfläche kommt es zu einem Austausch von Gruppen an der Oberfläche bzw. die Einführung und/oder den Einbau funktioneller Gruppen oder auch von Atomen. Die Beschichtung der Partikeloberfläche meint das Aufbringen einer vorzugsweise fest haftenden Schicht.

Unter einem "Atmosphärendruckplasma", auch als AD-Plasma oder Normaldruckplasma bezeichnet, versteht man ein Plasma, bei welchem der Druck ungefähr dem Atmosphärendruck entspricht. C. Tendero et al. geben in "Atmospheric pressure plasmas: A review"; Spectrochimica Acta Part B: Atomic Spectroscopy; 2005 einen Überblick über Atmosphärendruckplasmen. Die im erfindungsgemäßen Verfahren verwendbaren Atmosphärendruckplasmen können durch verschiedene Arten der Anregung erzeugt werden. In Frage kommen hier die AC (alternating current, Wechselstrom)-Anregung, die DC- (direct current, Gleichstrom) und Niederfrequenzanregung, die RF-Anregung und die Mikrowellenanregung. Vorzugsweise wird das erfindungsgemäß eingesetzte Atmosphärendruckplasma durch AC-Anregung erzeugt. Es hat sich als vorteilhaft für die Plasmaausbildung erwiesen, wenn die Anregung für das Atmosphärendruckplasma gepulst ist. Dies ist daher eine bevorzugte Ausführungsform des Atmosphärendruckplasmas im erfindungsgemäßen Verfahren. Die Pulsfrequenz ist dabei nicht besonders beschränkt und kann 5 bis 100 kHz sein, wobei der Bereich von 10 bis 50 kHz bevorzugt ist.

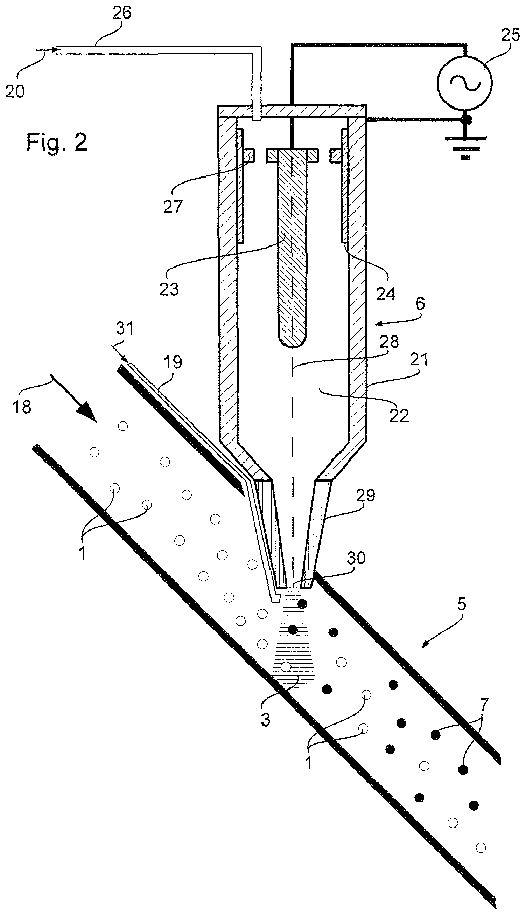

Aufgrund ihrer einfachen Handhabung wird das Atmosphärendruckplasma im erfindungsgemäßen Verfahren vorzugsweise mit einer Plasmadüse erzeugt. Der grundsätzliche Aufbau einer Plasmadüse wird im Folgenden unter Bezugnahme auf Fig. 2 näher erläutert. Eine Plasmadüse weist ein elektrisch leitfähiges Gehäuse 21 auf, das vorzugsweise länglich, insbesondere rohrförmig ausgebildet ist. Das Gehäuse bildet einen von einem Prozessgas durchströmten Düsenkanal 22. In dem Düsenkanal ist, vorzugsweise koaxial, eine Elektrode 23 angeordnet. Die Elektrode kann insbesondere eine Stiftelektrode sein. In den Düsenkanal ist ein Rohr 24 eines dielektrischen Materials, beispielsweise ein Keramikrohr eingesetzt. Mittels eines Hochfrequenzgenerators 25 wird eine Spannung zwischen der Elektrode und dem Gehäuse angelegt. Das Prozessgas 20 wird durch eine Leitung 26 in den Düsenkanal eingeleitet, und zwar vorzugsweise so, dass es drallförmig durch den Kanal hindurchströmt. Diese Strömung des Prozessgases kann durch eine Dralleinrichtung 27 erreicht werden. Dabei kann es sich um eine Platte mit Löchern handeln. Die zur Erzeugung von Atmosphärendruckplasmen, insbesondere in Plasmadüsen verwendbaren Prozessgase sind dem Fachmann geläufig. Beispielsweise können Luft, Stickstoff, Sauerstoff, Ammoniak (NH₃), Schwefelwasserstoff (H₂S), Edelgase, Wasserstoff und Mischungen der vorgenannten Gase verwendet werden. Das als Prozessgas eingesetzte Edelgas ist vorzugsweise Argon.

Beim Betrieb der Atmosphärendruckplasmadüse verläuft die lichtbogenähnliche Plasmaentladung von der Spitze der Mittelelektrode 23 im Wesentlichen in Axialrichtung des Düsenkanals 22 zu der Gegenelektrode 29, die ebenso wie das Gehäuse 21 geerdet ist. Hierdurch tritt ein Plasmastrahl 3 in Form einer "Flamme" unmittelbar unterhalb des Düsenausgangs 30 aus.

Die Funktionsweise einer Plasmadüse ist dem Fachmann geläufig und ist beispielsweise in der DE-A-195 32 412, sowie der DE-U-299 21 694 beschrieben. Im Ergebnis wird beim Betrieb der Plasmadüse unterhalb der Düsenöffnung ein Plasmastrahl in Form einer "Flamme" erzeugt. Grundsätzlich können im erfindungsgemäßen Verfahren beliebige Plasmadüsen eingesetzt werden. Gemäß einer bevorzugten Ausführungsform kommen Plasmadüsen zum Einsatz, wie sie in der DE-A-195 32 412 oder DE-U-299 21 684 beschrieben sind. Besonders bevorzugt kommen Plasmadüsen zum Einsatz, die von der DE-A-195 32 412 umfasst sind, insbesondere kommerziell erhältliche Standard-Einzeldüsen der Firma Plasmatreat (Deutschland).

Wie bereits erwähnt, ist die Art des Atmosphärendruckplasmas, dem die umhüllten Partikel im erfindungsgemäßen Verfahren ausgesetzt werden, nicht besonders beschränkt. Beispielsweise kann es sich um ein aktives Atmosphärendruckplasma handeln. Einem solchen Typ Plasma wird nach der Lehre der EP-A-1 702 690 die Dispersion der Partikel in dem verflüssigten Gas oder überkritischen Fluid ausgesetzt. Es handelt sich dabei um ein Plasma, das direkt zwischen den Elektroden ausgebildet wird. Es besteht daher die Gefahr der Verunreinigung und letztendlich Beschädigung der Elektroden. Aus diesem Grund wird in der EP-A-1 702 690 empfohlen, die Elektroden durch Anblasen mit einem Gas vor Kontamination mit Partikeln und Precursoren zu schützen. Diese Maßnahme erübrigt sich, wenn das Atmosphärendruckplasma im erfindungsgemäßen Verfahren ein relaxierendes Atmosphärendruckplasma ist. Dies ist daher eine besonders bevorzugte Ausführungsform der Erfindung. Wie in Fig. 2 illustriert, befindet sich das relaxierende Plasma 3 in der erfindungsgemäß besonders vorteilhaft einsetzbaren Plasmadüse direkt außerhalb des Düsenausgangs 30.

Unter einem "aktiven" Plasma wird allgemein ein Plasma verstanden, das sich innerhalb des Volumens befindet, das von den Elektroden begrenzt wird, wobei die Elektrode das Gehäuse ist. Hingegen findet sich bei einem "relaxierenden" Plasma, das Plasma direkt außerhalb der Anregungszone, die durch die Elektrode, vorzugsweise das Gehäuse, begrenzt wird.

Im erfindungsgemäßen Verfahren kommt es im Bereich des Atmosphärendruckplasmas, also der Atmosphärendruckplasmazone, zu einer Modifizierung von solchen Partikeln, die in Form umhüllter Partikel in die Plasmazone gelangen. Diese Modifizierung erfolgt erfindungsgemäß bevorzugt in einer Reaktionskammer. Vor allem wenn die umhüllten Partikel mit einem Trägergas in die Plasmazone transportiert und die dort modifizierten Partikel von der Plasmazone weggeführt werden, ist eine längliche Ausgestaltung der Reaktionskammer vorteilhaft. Besonders bevorzugt ist die Reaktionskammer ein Rohr. Die Abmessungen der Reaktionskammer, insbesondere des Rohrs, sind nicht besonders beschränkt. Das Rohr kann beispielsweise einen Durchmesser von 5 mm bis 300 mm, vorzugsweise von 50 mm haben. Seine Länge kann 30 mm bis 1000 mm, vorzugsweise 300 mm sein. Das Material der Reaktionskammer, in dem die umhüllten Partikel gemäß einer bevorzugten Ausführungsform dem Atmosphärendruckplasma ausgesetzt werden, ist nicht besonders beschränkt, solange das Material dem Atmosphärendruckplasma gegenüber beständig ist. Beispielsweise können Stahl, Aluminium, Kupfer oder hitzebeständige Legierungen, wie sie in Zündkerzen verwendet werden, zum Einsatz kommen.

Die Einrichtung zur Erzeugung des Atmosphärendruckplasmas, beispielsweise die Atmosphärendruckplasmadüse, steht zur Erzeugung des Atmosphärendruckplasmas in der Reaktionskammer mit dieser geeignet in Verbindung. Eine mögliche Anordnung der Atmosphärendruckplasmadüse zu dem Reaktionsrohr ist in Fig. 2 schematisch dargestellt. In der Fig. 2 ist der Winkel zwischen der Hauptachse 28 der Plasmadüse und der Hauptachse des Reaktionsrohrs (nicht eingezeichnet) vorzugsweise ein Winkel von < 80°, besonders bevorzugt zwischen 20 und 70°. Ein solcher Winkel bietet gegenüber einem größeren Winkel den Vorteil, dass der Rohrbereich in Längsrichtung, der von dem Plasmastrahl überstrichen wird, länger ist. Ferner kann damit vermieden werden, dass der Plasmastrahl direkt auf die gegenüberliegende Wand des Reaktionsrohrs trifft. Folglich ist ein kleiner Winkel von beispielsweise 30 bis 50° besonders vorteilhaft. Indessen kann die Hauptachse der Plasmadüse beliebig zur Hauptachse des Rohrs angeordnet werden.

Im erfindungsgemäßen Verfahren können die umhüllten Partikel selbstverständlich mehreren Atmosphärendruckplasmazonen nacheinander ausgesetzt werden. Dazu können beispielsweise mehrere Plasmadüsen in Längsrichtung der Reaktionskammer angeordnet sein. Auch besteht die Möglichkeit, mit mehreren Atmosphärendruckplasmadüsen die Größe des durch das Atmosphärendruckplasma erzeugten Reaktionsvolumens zu vergrößern. Schließlich kann die Intensität des Atmosphärendruckplasmas durch Verwendung mehrerer Plasmadüsen erhöht werden. Auch die Wirbelbildung durch den Gasstrom in der Reaktionskammer, beispielsweise dem Reaktionsrohr, kann durch mehrere Plasmadüsen verändert und hierdurch die Modifizierung der Partikel verändert werden. In Frage kommt hier eine vorzugsweise kranzförmige Anordnung mehrerer, beispielsweise von 2, 3, 4 oder mehr, insbesondere 7 Plasmadüsen entlang des Umfangs der Reaktionskammer, insbesondere des Reaktionsrohrs. Unter "mehreren" Plasmadüsen werden 2 oder mehr, beispielsweise 2, 3, 4, 5, 6, 7 oder mehr Düsen verstanden.

Durch solche Maßnahmen lässt sich der Modifizierungsgrad der umhüllten Partikel (d.h. im Falle der Funktionalisierung die Anzahl der funktionellen Gruppen pro Partikel und im Falle der Beschichtung die Dicke der Beschichtung) und/oder der Anteil der modifizierten Partikel in dem der Plasmazone(n) zugeführten Partikelkollektiv erhöhen. Auch lässt sich beispielsweise durch eine kranzförmige Anordnung von mehreren Plasmadüsen entlang des Rohrumfangs, wie sie oben angesprochen ist, ein größerer Rohrdurchmesser einsetzen und damit der Durchsatz an zu modifizierenden Partikeln erhöhen.

Im Folgenden wird die Oberflächenfunktionalisierung der Partikel als Spezialfall der im erfindungsgemäßen Verfahren erreichten Modifizierung der Partikeloberfläche näher beschrieben.

Im Atmosphärendruckplasma kann im erfindungsgemäßen Verfahren die Oberfläche der Partikel funktionalisiert werden. Dies kann beispielsweise durch reaktive, z.B. Bindungsbruch induzierende Stöße der reaktiven Spezies in dem Prozessgas des Atmosphärendruckplasmas unter Erzeugung reaktiver Stellen an der Partikeloberfläche, die anschließend mit in der Atmosphärendruckplasmazone ebenfalls vorliegenden Atomen unter Bildung funktioneller Gruppen reagieren, geschehen. Die in der Atmosphärendruckplasmazone vorliegenden Atome können dabei aus dem Prozessgas und/oder der flüssigen Verbindung stammen, die die zu funktionalisierenden Partikel umhüllt.

Zum besseren Verständnis der Prozesse, die im erfindungsgemäßen Verfahren in der Atmosphärendruckplasmazone ablaufen, soll ein Beispiel gegeben werden.

Wird Argon als Prozessgas eingesetzt, werden im Atmosphärendruckplasma energetisch angeregte Spezies, ggf. auch Ar⁺-Ionen erzeugt. Reaktive Stöße dieser Spezies mit den Oberflächen der Partikel im Atmosphärendruckplasma führen teilweise zum Bindungsbruch, und die hierdurch erzeugte reaktive Stelle kann mit Atomen der flüssigen Verbindung reagieren, die die Partikel umhüllt. Beispielsweise können, wenn Wasser als die flüssige Verbindung zum Einsatz kommt, O-Atome oder OH-Gruppen in die Partikeloberfläche eingebaut werden.

Wie zuvor erwähnt, schließt das erfindungsgemäße Verfahren zur Modifizierung der Oberfläche von Partikeln auch die Beschichtung der Partikel ein. Zu diesem Zweck kann mindestens eine Beschichtungsvorläuferverbindung in das Atmosphärendruckplasma eingespeist werden. Der Begriff "Beschichtungsvorläuferverbindung" wird in der vorliegenden Erfindung so verstanden, dass diese Verbindungen geeignet sind, um im erfindungsgemäßen Verfahren im Atmosphärendruckplasma eine Beschichtung um die Partikel herum auszubilden.

Die Einspeisung der Beschichtungsvorläuferverbindung in das Atmosphärendruckplasma erfolgt, wie in Fig. 2 veranschaulicht ist, vorzugsweise in das relaxierende Plasma. Eine Zuführung zusammen mit dem Prozessgas ist weniger vorteilhaft, da es hierbei zu einer Vorreaktion, beispielsweise Vorpolymerisation der Beschichtungsvorläuferverbindung bereits im Bereich des aktiven Plasmas kommen kann. Wie in Fig. 2 gezeigt ist, kann die mindestens eine Beschichtungsvorläuferverbindung über eine Leitung 19, beispielsweise ein Rohr oder einen hitzebeständigen Schlauch in das Atmosphärendruckplasma, bei dem es sich vorzugsweise um ein relaxierendes Atmosphärendruckplasma handelt, eingespeist werden. Wenn eine Plasmadüse zur Erzeugung des Atmosphärendruckplasmas zum Einsatz kommt, ist es bevorzugt, dass das Ende der Zuleitung 19 sich in der Nähe des Düsenausgangs 30 der Plasmadüse befindet. Vorzugsweise ist das Ende der Zuleitung 5 mm bis 5 cm vom Düsenausgang 30 entfernt. Die Art und Weise der Zufuhr der Beschichtungsvorläuferverbindungen in die Atmosphärendruckplasmazone, beispielsweise über die Zuleitung 19 ist nicht besonders beschränkt. Je nach Art der Beschichtungsvorläuferverbindung kommt ihre Einspeisung in das Atmosphärendruckplasma im gasförmigen, flüssigen oder festen, pulverförmigen Zustand in Frage. Ggf. erfolgt der Transport der Beschichtungsvorläuferverbindung durch die Zuleitung 19 mit Hilfe eines Trägergases. HMDSO, TEOS und HMDSN können beispielsweise als Gas zugeführt werden, das z.B. durch einen Verdampfer erzeugt wird.

Die Beschichtungsvorläuferverbindung kann eine solche sein, die im Atmosphärendruckplasma polymere, insbesondere plasmapolymere Beschichtungen um die Partikel herum ausbilden kann. Beispiele für Beschichtungsvorläuferverbindungen, die zu hydrophoben Polymerbeschichtungen führen können, sind Hexamethyldisiloxan (HMDSO), Tetraethoxysilan (TEOS), Hexamethyldisilazan (HMDSN), Acetylen, Maleinsäure, Ölsäure, Linolsäure und Linolensäure. Für hydrophilere Beschichtungen erwiesen sich Acrylsäure, Methacrylsäure, Polyacrylsäure, Benzoesäure und Methacrylsäuremethylester als geeignet. Zur Erzeugung von Beschichtungen mit schwefelhaltigen Gruppen ist beispielsweise Thioharnstoff und für Beschichtungen mit stickstoffhaltigen Gruppen Harnstoff, Pyrrol und Pyridin geeignet. Weitere Beispiele für verwendbare Beschichtungsvorläuferverbindungen für polymere Beschichtungen sind N-Trimethylchitosan, Benzochinon und Polyvinylpyrrolidon.

Mit dem erfindungsgemäßen Verfahren können die Partikel auch mit Metallen beschichtet werden. Für Metallbeschichtungen sind beispielsweise Metallcarbonyle, wie Eisenpentacarbonyl als Beschichtungsvorläuferverbindungen geeignet.

Die Beschichtung der Partikel schließt regelmäßig auch eine Funktionalisierung der Partikel ein, denn wie oben beschrieben, führt die Anwesenheit des Prozessgases und der mindestens einen flüssigen Verbindung regelmäßig zu einer Funktionalisierung der Partikel.

Im erfindungsgemäßen Verfahren kommt es im Atmosphärendruckplasma zu einem Verdampfen der flüssigen Verbindung, die die Partikel umhüllt. Gleichzeitig erfolgt die Funktionalisierung der Partikel und ggf. die Beschichtung. Dabei verdampft aufgrund ihres höheren Siedepunktes die flüssige Verbindung deutlich langsamer als die verflüssigten Gase oder überkritischen Fluide der EP-A-1 702 690. Aufgrund der längeren Anwesenheit der Hülle der flüssigen Verbindung und der größeren Energie, die zu Ihrer Verdampfung erforderlich ist, ist die Energie-Dissipation und Reaktionschemie bei der Oberflächenmodifizierung in dem erfindungsgemäßen Verfahren eine völlig andere als im Verfahren der EP-A-1 702 690. Die genannten energetischen Unterschiede im Vergleich zur EP-A-1 702 690 können insbesondere zu einer unterschiedlichen Fragmentierung der an der Modifizierung beteiligten Moleküle/Atome und damit letztendlich zu anderen Reaktionsprodukten führen.

Überraschenderweise erlaubt es das erfindungsgemäße Verfahren zur Modifizierung der Oberfläche von Partikeln, durch Variation der flüssigen Verbindung wesentliche Eigenschaften der modifizierten Partikel, z.B. die Benetzungseigenschaften, für die der Kontaktwinkel zu Wasser ein geeigneter Parameter ist, deutlich zu verändern, selbst wenn alle übrigen Verfahrensbedingungen (insbesondere zur Erzeugung des Atmosphärendruckplasmas) konstant gehalten werden. Somit ist mit dem erfindungsgemäßen Verfahren eine gezielte Veränderung der Oberflächeneigenschaften der Partikel durch Modifizierung in einem Atmosphärendruckplasma besonders leicht möglich. Man muss nur die flüssige Verbindung verändern, mit der die Partikel umhüllt werden sollen.

Mit dem erfindungsgemäßen Verfahren modifizierte Partikel lassen sich in verschiedenste Materialien inkorporieren. Beispielsweise seien Klebstoffe, Kunststoffe, Lacke pharmazeutische Zubereitungen und Farben genannt. Dabei kann das erfindungsgemäße Verfahren aufgrund seiner Inlinefähigkeit besonders einfach in Produktionslinien für diese Endprodukte oder auch für die zu modifizierenden Partikel (beispielsweise für Kohlenstoffnanoröhrchen) integriert werden. Dies gilt insbesondere für die zyklische Prozessführung des erfindungsgemäßen Verfahrens, die später ausführlicher beschrieben wird.

Um die zu modifizierenden Partikel mit einer Hülle der flüssigen Verbindung zu versehen, hat es sich als besonders vorteilhaft erwiesen, die Partikel in der mindestens einen flüssigen Verbindung zu dispergieren und die erhaltene Dispersion anschließend unter Bildung der umhüllten Partikel zu zerstäuben. Dieses Verfahren erwies sich als besonders gut geeignet, um eine vollständige Umhüllung sämtlicher eingesetzter Partikel mit der flüssigen Verbindung zu erreichen.

Die Dispergierung der Partikel kann in einem Dispersionsbehälter erfolgen, der die mindestens eine flüssige Verbindung, bei der es sich vorzugsweise um ein Lösungsmittel oder eine Lösungsmittelmischung handelt, enthält. Wie sich zeigte, kann die Dispergierung der Partikel in der flüssigen Verbindung durch die Einwirkung von Ultraschall und/oder die Zugabe von Tensid verbessert werden. Diese Maßnahmen bewirken eine Deagglomeration der zu modifizierenden Partikel, also eine Zerlegung von Agglomeraten zu kleineren Agglomeraten oder einzelnen Partikeln, vergrößern so die Oberfläche des zu modifizierenden Partikelkollektivs und führen letztendlich zur Vergrößerung der Behandlungseffizienz. Als Tenside sind solche verwendbar, die sich zum Dispergieren von Partikeln eignen. Ein Beispiel ist das Tensid Lumiten N-OG der BASF.

Die Bildung von umhüllten Partikeln aus den in der flüssigen Verbindung dispergierten Partikeln kann beispielsweise unter Ausnutzung des Venturi-Effekts mit Hilfe eines schnell strömenden Trägergases erreicht werden. Nach Art einer Strahlpumpe wird dabei die Dispersion der Partikel in der flüssigen Verbindung durch ein schnell strömendes Gas, vorzugsweise ein Trägergas nach oben gesaugt. Hierzu erwiesen sich Strömungsgeschwindigkeiten des Gases (Trägergases) von 1 l/min bis 5000 l/min, mehr bevorzugt 100 bis 500 l/min, ganz besonders 210 l/min als vorteilhaft. Das Ansaugen der Dispersion der zu modifizierenden Partikel in der flüssigen Verbindung geschieht vorteilhaft in einer Strahlpumpe, die eine Rohrverzweigung, vorzugsweise in Form eines T-Rohrs aufweist. Der erste Anschluss dieser Strahlpumpe ist mit der Quelle des Transportmediums, vorzugsweise des Trägergases, verbunden und über den zweiten Anschluss wird die Dispersion der Partikel in der flüssigen Verbindung zugeführt und durch das schnell strömende Trägergas angesaugt. Am Verzweigungspunkt zwischen dem ersten und dem zweiten Anschluss kommt es dann zur Ausbildung der Hülle der flüssigen Verbindung um die Partikel herum und die umhüllten Partikel werden dann weiter in die Atmosphärendruckplasmazone transportiert. Dies geschieht vorzugsweise mit dem Gasstrom des Trägergases.

Das im erfindungsgemäßen Verfahren eingesetzte Trägergas ist vorzugsweise ein inertes Gas, wie beispielsweise Stickstoff.

In der Atmosphärendruckplasmazone werden dann die umhüllten Partikel modifiziert. Abhängig von der Verweildauer in der Reaktionskammer kann es dabei zu einer unvollständigen Modifikation der umhüllten Partikel kommen, die in die Plasmazone transportiert werden. Meistens entsteht in dem durch das Atmosphärendruckplasma erzeugten Reaktionsvolumen ein Gemisch von oberflächenmodifizierten Partikeln und nicht-oberflächenmodifizierten Partikeln, die in dieser Anmeldung der Einfachheit halber als "modifizierte" und "unmodifizierte" Partikel bezeichnet werden. Dieses Gemisch wird dann aus der Atmosphärendruckplasmazone weggeführt.

Anschließend können die modifizierten von den unmodifizierten Partikeln getrennt werden. Hierzu sind verschiedene Methoden verwendbar, beispielsweise die Trennung der Partikel durch Zentrifugieren, durch elektrostatische Separation oder durch chemische Fällungsreaktionen. Gemäß einer bevorzugten Ausführungsform erfolgt die Trennung des Gemischs der modifizierten und unmodifizierten Partikel auf Basis der unterschiedlichen Sedimentationsgeschwindigkeiten in einer Sedimentationsflüssigkeit, die sich in einem Sedimentationsbehälter, beispielsweise einem Sedimentationsbecken befinden kann.

Dabei wird vorteilhaft der Gasstrom, der modifizierte und unmodifizierte Partikel enthält, in der Sedimentationsflüssigkeit aufgefangen. Die Sedimentationsflüssigkeit wird vorteilhaft so gewählt, dass die modifizierten Partikel darin eine geringere Sedimentationsgeschwindigkeit haben als die unmodifizierten. Dann können die unmodifizierten Partikel in der Sedimentationsflüssigkeit absinken und die unmodifizierten Partikel, die nicht oder mit deutlich geringerer Geschwindigkeit absinken, separiert werden und beispielsweise über einen oberen Abfluss des Sedimentationsbehälters abfließen.

Die in der Sedimentationsflüssigkeit, die durch den oberen Abfluss des Sedimentationsbehälters entnommen wurde, enthaltenen modifizierten Partikel können anschließend von der Sedimentationsflüssigkeit getrennt oder auch direkt als Dispersion, beispielsweise in Farben und Lacken eingesetzt werden. Für die Abtrennung der modifizierten Partikel von der Sedimentationsflüssigkeit eignen sich beispielsweise Filtrationsverfahren.

Die Sedimentationsflüssigkeit, die verwendet werden kann, ist nicht besonders beschränkt, solange darin die zu trennenden modifizierten und unmodifizierten Partikel eine deutlich unterschiedliche Sedimentationsgeschwindigkeit haben, so dass eine Abtrennung wie oben beschrieben möglich ist. Der Fachmann wird für ein zu trennendes System modifizierter und unmodifizierter Partikel die Sedimentationsflüssigkeit geeignet auswählen, indem er beobachtet, ob es in der gewählten Testflüssigkeit zu einer Trennung von Partikeln kommt und anschließend die abgesunkene Fraktion und andere Fraktion der Partikel analytisch, beispielsweise mit XPS, untersucht. Konkrete Beispiele für verwendbare Sedimentationsflüssigkeiten sind Wasser, Alkohol (insbesondere niedere Alkohole wie Methanol, Ethanol und Propanol, ganz besonders Ethanol) und Ammoniak. Weitere Beispiele sind diejenigen, die oben für die flüssige Verbindung angegeben wurden, die im erfindungsgemäßen Verfahren die Partikel umhüllt.

Es erwies sich für die Reaktionsführung des erfindungsgemäßen Verfahrens als vorteilhaft, wenn die Sedimentationsflüssigkeit für die Trennung der modifizierten und unmodifizierten Partikel und die flüssige Verbindung zur Umhüllung der Partikel identisch sind. Wie noch später ausgeführt wird, ermöglicht dies insbesondere eine zyklische Prozessführung, die erfindungsgemäß besonders bevorzugt ist.

Die Sedimentationsflüssigkeit kann Reaktanden enthalten, die mit den modifizierten Partikeln eine weitere Reaktion, beispielsweise eine Pfropfungsreaktion, eingehen können. Alternativ kann die separierte Sedimentationsflüssigkeit mit darin enthaltenen modifizierten Partikeln einer weiteren Verfahrensstufe zugeführt werden, beispielsweise in einen separaten Behälter geführt werden, in dem die Weiterreaktion mit den Reaktanden erfolgt. Dieser separate Behälter steht mit dem Abfluss des Sedimentationsbehälters in Verbindung.

Nach dem Durchtritt durch die Sedimentationsflüssigkeit wird das Trägergas von eventuell mitgeschleppten Partikeln gereinigt. Diese Gasreinigung kann in geeigneten Vorrichtungen erfolgen. Beispielsweise und ohne Einschränkung können Gaswäscher oder Zyklone genannt werden. Aufgrund der besonders effektiven Entfernung von Partikeln ist eine Sequenz aus Zyklon und nachgeschaltetem Gaswäscher bevorzugt. Der Zyklon hält Partikel mit einer Korngröße bis zum unteren Mikrometerbereich zurück, und der Gaswäscher entfernt eventuell verbleibende Nanopartikel. Das so abgeführte Trägergas kann in die Atmosphäre abgeblasen werden oder ggf. zyklisch zu dem ersten Anschluss der Strahlpumpe zurückgeführt werden.

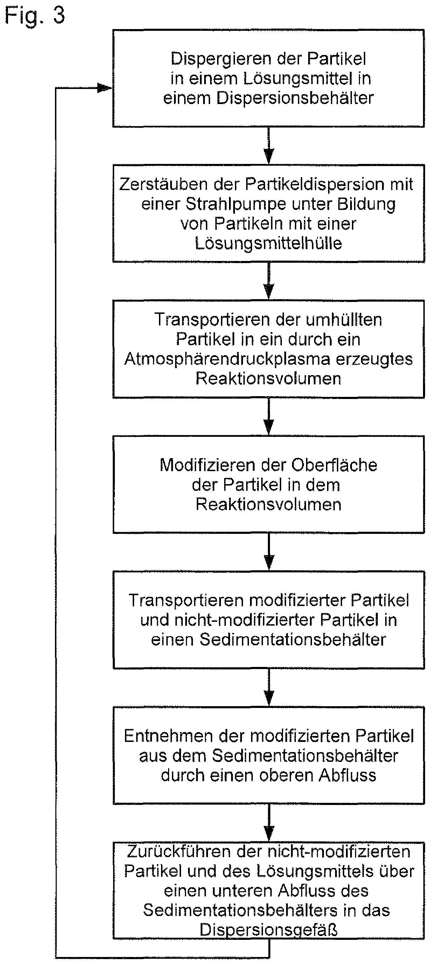

Wenn die Sedimentationsflüssigkeit und die flüssige Verbindung zur Umhüllung der Partikel identisch sind, bietet sich die Möglichkeit der zyklischen Reaktionsführung wie folgt. In der Sedimentationsflüssigkeit abgesunkene unmodifizierte Partikel werden zusammen mit Sedimentationsflüssigkeit, vorzugsweise über den unteren Abfluss des Sedimentationsbehälters, in den Dispersionsbehälter zurückgeführt und werden anschließend wie oben beschrieben mit einer Hülle versehen und dann dem Atmosphärendruckplasma ausgesetzt, in dem die Oberfläche der Partikel modifiziert wird. Dem Dispersionsbehälter können ggf. von außen weitere zu modifizierende Partikel zugeführt werden. Die zyklische Reaktionsführung ist im Flussschema der Fig. 3 näher veranschaulicht.

Besonders bevorzugt ist die folgende Ausgestaltung des erfindungsgemäßen Verfahrens als zyklischer Prozess zur Modifizierung der Oberfläche von Partikeln in dem Atmosphärendruckplasma. Der zyklische Prozess umfasst gemäß dieser besonders bevorzugten Ausführungsform die folgenden Schritte: (i) Partikel werden in einem Dispersionsbehälter in mindestens einem Lösungsmittel dispergiert, wobei das Lösungsmittel bei Raumtemperatur und Atmosphärendruck flüssig ist; (ii) die Dispersion der Partikel wird durch eine Strahlpumpe, die mit einen Trägergas betrieben wird, unter Bildung der umhüllten Partikel zerstäubt; (iii) die umhüllten Partikel werden in ein durch ein Atmosphärendruckplasma erzeugtes Reaktionsvolumen transportiert, in dem ihre Oberfläche modifiziert wird und so oberflächenmodifizierte Partikel erhalten; (iv) die oberflächenmodifizierten Partikel werden zusammen mit nicht-oberflächenmodifizierten Partikeln in einen Sedimentationsbehälter transportiert, der einen oberen und einen unteren Abfluss aufweist, der das mindestens eine Lösungsmittel als Sedimentationslösungsmittel enthält und in dem die nicht-oberflächenmodifizierten Partikel aufgrund ihrer höheren Sedimentationsgeschwindigkeit als die oberflächenmodifizierten Partikel absinken; (v) oberflächenmodifizierte Partikel werden durch den oberen Abfluss aus dem Sedimentationsbehälter entnommen; (vi) nicht-oberflächenmodifizierte Partikel werden zusammen mit dem mindestens einen Lösungsmittel über den unteren Abfluss des Sedimentationsbehälters zu Schritt (i) zurückgeführt. Besonders vorteilhaft erfolgt der Transport der betreffenden Partikel in den Schritten (iii) und (iv) primär durch das Trägergas. Beim Transport in Schritt (iv) wirkt das Prozessgas, das in die Atmosphärendruckplasmadüse eingeleitet wird, bei dem Transport mit.

Die oben beschriebene zyklische Reaktionsführung bietet den Vorteil, dass der Umsatz der modifizierten Partikel, bezogen auf die eingesetzten Partikel, vervollständigt werden kann. Auf diese Weise können nahezu alle eingesetzten Partikel oberflächenmodifiziert werden. Ein weiterer Vorteil der zyklischen Reaktionsführung, bei der die Sedimentationsflüssigkeit und die flüssige Verbindung zur Umhüllung der Partikel gemäß einer bevorzugten Ausführungsform ein und dasselbe Lösungsmittel sind, ist es, dass die Lösungsmittelmenge auf ein Minimum reduziert wird, was erhebliche Kostenvorteile mit sich bringt.

Gemäß einem weiteren Aspekt betrifft die vorliegende Erfindung eine Vorrichtung, die für die Durchführung des erfindungsgemäßen Verfahrens, insbesondere des zyklischen Prozesses der Erfindung geeignet und dafür besonders angepasst ist. Die Vorrichtung umfasst eine Reaktionskammer mit einem Einlass und einem Auslass; eine Atmosphärendruckplasmadüse, die zur Erzeugung eines Atmosphärendruckplasmas in der Reaktionskammer mit der Reaktionskammer in Verbindung steht; eine Strahlpumpe die mit dem Einlass der Reaktionskammer in Verbindung steht, mit einem ersten Anschluss zum Einbringen eines Trägergases und einem zweiten Anschluss; und einen Dispersionsbehälter, der mit dem zweiten Anschluss der Strahlpumpe in Verbindung steht. Dabei steht der Dispersionsbehälter mit dem zweiten Anschluss der Strahlpumpe vorzugsweise so in Verbindung, dass durch die Strahlpumpe Partikeldispersionen aus dem Dispersionsbehälter angesaugt und in Richtung des Einlasses der Reaktionskammer, vorzugsweise unter Zerstäubung, gepumpt werden können.

Die erfindungsgemäße Vorrichtung weist gemäß einer besonders bevorzugten Ausführungsform einen Sedimentationsbehälter auf. Dieser Sedimentationsbehälter steht mit dem Auslass der Reaktionskammer in Verbindung. Ferner weist er einen oberen Abfluss auf, über den in der in dem Sedimentationsbehälter enthaltenen Sedimentationsflüssigkeit dispergierte Verbindungen entnommen werden können. Ferner weist der Sedimentationsbehälter einen unteren Abfluss auf, der mit dem Dispersionsbehälter der Vorrichtung in Verbindung steht, und durch den Sedimentationsflüssigkeit, die Partikel darin dispergiert enthält, zum Dispersionsbehälter geleitet werden kann. Der untere Abfluss ist vorzugsweise an der tiefsten Stelle des Sedimentationsbehälters angebracht.

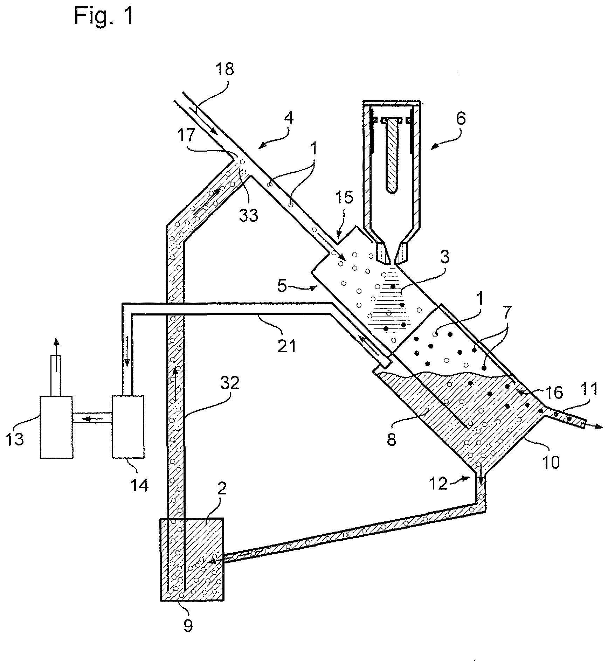

In Folgenden soll die Erfindung anhand der Figuren 1 und 2 näher beschrieben werden.

Eine bevorzugte zyklische Variante des erfindungsgemäßen Verfahrens, insbesondere des zyklischen Prozesses der Erfindung ist in Fig. 1 erläutert. In der Zeichnung symbolisieren Pfeile Flussrichtungen von Medien. Die schräg schraffierten Bereiche in den Leitungen und im Sedimentations- und Dispersionsbehälter symbolisieren zeigen das Vorliegen einer flüssigen Phase an. Die in der Zeichnung dargestellte flüssige Verbindung 2 und die Sedimentationsflüssigkeit 8 sind im dargestellten Verfahren ein und dieselbe Flüssigkeit.

Im Dispersionsbehälter 9 werden die zu modifizierenden Partikel 1 in der flüssigen Verbindung 2, bei der es sich um ein Lösungsmittel handelt, dispergiert. Mit Hilfe einer Strahlpumpe 4 wird die Dispersion über eine Leitung 32 mit einem Anschluss 33 zu der Strahlpumpe gesaugt. Dies geschieht durch ein Trägergas, dessen Strömungsrichtung in der Zeichnung mit dem Pfeil 18 bezeichnet ist. Das Trägergas gelangt dabei über einen Anschluss 17 der Strahlpumpe 4 in Richtung des Einlasses 15 der Reaktionskammer 5. Durch die schnelle Strömung des Trägergases wird über den Anschluss 33 der Strahlpumpe 4, der mit dem Dispersionsbehälter 9 über die Leitung 32 in Verbindung steht, die Dispersion der zu modifizierenden Partikel in dem Lösungsmittel angesaugt und es kommt zur Bildung der umhüllten Partikel. Die umhüllten Partikel sind in der Zeichnung der Fig. 1 ebenso wie zu modifizierenden Partikel ohne Lösungsmittelhülle als Kreise dargestellt und mit dem Bezugszeichen 1 versehen.

In der Reaktionskammer 5 kommt es dann zur Modifizierung der Oberfläche der umhüllten Partikel in dem Atmosphärendruckplasma 3, das durch eine Atmosphärendruckplasmadüse 6 erzeugt wird, die mit der Reaktionskammer 5 in Verbindung steht. Für die Zwecke der vorliegenden Anmeldung wird das Atmosphärendruckplasma 3 gelegentlich auch als durch das Atmosphärendruckplasma, insbesondere die Atmosphärendruckplasmadüse 6, erzeugte Reaktionsvolumen 3 bezeichnet. In der Atmosphärendruckplasmazone bzw. dem durch das Atmosphärendruckplasma erzeugten Reaktionsvolumen 3 kommt es zur Funktionalisierung der Oberfläche der umhüllten Partikel 1. Zusätzlich kann zur Beschichtung der Partikel über eine Zuleitung, die in Fig. 1 nicht gezeigt ist und die in Fig. 2 mit dem Bezugszeichen 19 versehen ist, eine Beschichtungsvorläuferverbindung in die Atmosphärendruckplasmazone 3 eingespeist werden.

Die so erhaltenen modifizierten Partikel 7, die in den Zeichnungen als ausgefüllte Kreise dargestellt sind, werden mit dem Trägergasstrom 18 und untergeordnet durch den Strom des Prozessgases (Bezugszeichen 20 in Fig. 2) in der Reaktionskammer 5 weitertransportiert. Die Mischung der unmodifizierten Partikel 1 und der modifizierten Partikel 7 wird zur Trennung über einen Auslass 16 der Reaktionskammer 5 in den Sedimentationsbehälter 10 geführt. In der Fig. 1 taucht das Ende des Reaktionsrohrs 5 direkt in die Sedimentationsflüssigkeit 8 ein. Alternativ kann der Auslass 16 über eine weitere Leitung mit dem Sedimentationsbehälter verbunden sein, wobei das Ende dieser Leitung in die Sedimentationsflüssigkeit 8 hineinreicht. In der Sedimentationsflüssigkeit 8 kommt es aufgrund der unterschiedlichen Sedimentationsgeschwindigkeiten zu einer Trennung der modifizierten Partikel 7 von den unmodifizierten Partikeln 1. Aufgrund ihrer niedrigeren Sedimentationsgeschwindigkeit in der Sedimentationsflüssigkeit 8 können die modifizierten Partikel 7 über einen oberen Abfluss 11 aus dem Sedimentationsbecken 10 entnommen werden und anschließend von der Sedimentationsflüssigkeit 8 getrennt werden.

Die unmodifizierten Partikel 1 sinken in der Sedimentationsflüssigkeit zu Boden und werden über den unteren Abfluss 12 zu dem Dispersionsbehälter 9 zurückgeführt. In den Dispersionsbehälter 9 können durch einen Einlass (in Fig. 1 nicht gezeigt) ggf. noch frische zu modifizierende Partikel gegeben werden. Über eine Leitung 21 strömt das Trägergas, das nach Durchtritt durch die Sedimentationsflüssigkeit 8 einen gewissen Anteil Partikel (sowohl unmodifizierte Partikel 1 als auch modifizierte Partikel 7) enthalten kann, aus. Zur Entfernung der über das Trägergas ausgetragenen Partikel strömt das Trägergas durch einen Zyklon 14 und anschließend durch einen Gaswäscher 13.

In dem durch das Atmosphärendruckplasma erzeugten Reaktionsvolumen 3 kommt es zu einer Verdampfung gewisser Mengen der flüssigen Verbindung 2. Diese flüssige Verbindung kann durch Zugabe entsprechender Mengen der flüssigen Verbindung 2 ausgeglichen werden. Die Zugabe erfolgt vorteilhaft durch einen (in Fig. 1 nicht gezeigten) Einlass des Dispergierbehälters 9 oder des Sedimentationsbehälters 10. Dabei ist zu berücksichtigen, dass die Sedimentationsflüssigkeit 8 und die flüssige Verbindung 2 in Fig. 1 dieselbe Flüssigkeit bezeichnen.

In Fig. 2 ist der Bereich näher veranschaulicht, in dem es beim erfindungsgemäßen Verfahren zu der Modifizierung der Partikel kommt. Insbesondere zeigt diese Figur auch die Zuleitung 19, über die Beschichtungsvorläuferverbindungen in die Atmosphärendruckplasmazone 3 eingespeist werden können. Darüber hinaus zeigt die Fig. 2 in größerem Detail den Aufbau einer Atmosphärendruckplasmadüse, die im erfindungsgemäßen Verfahren besonders vorteilhaft zum Einsatz kommt.

### BEISPIELE

Im Folgenden wird das erfindungsgemäße Verfahren zur Modifizierung der Oberfläche von Partikeln anhand eines Ausführungsbeispiels näher erläutert.

Um die Auswirkung der flüssigen Verbindung zur Umhüllung der Partikel auf die Eigenschaften der modifizierten (hier funktionalisierten) Partikel zu untersuchen, wurde das folgende Experiment durchgeführt.

Als zu funktionalisierende Partikel wurden mehrwandige Kohlenstoffnanoröhrchen (MWCNT, multi-walled carbon nanotubes) Baytubes C 150P von der Firma Bayer verwendet. Die Nanoröhrchen wurden zunächst 60 Minuten lang in dem in der Tabelle angegeben Lösungsmittel durch Ultraschallbehandlung zerkleinert um so die Löslichkeit zu verbessern.

Die Nanoröhrchen wurden mit dem Lösungsmittel durch ein Stickstoff-Trägergas (2,8 bar Druck) nach dem Venturi-Prinzip in das Reaktionsrohr befördert wo sie dann mit dem Atmosphärendruckplasma interagieren konnten. Das Atmosphärendruckplasma wurde mit einer Atmosphärendruckplasmadüse (Typ PFW 10 von der Firma Plasmatreat) mit Sauerstoff als Prozessgas (Gasstrom 30 l/min) erzeugt. Die verwendete Atmosphärendruckplasmadüse arbeitete bei einer Frequenz von 19 kHz und wurde bei 9,4 A und 285 V (Wechselspannung) betrieben. So wurden modifizierte Kohlenstoffnanoröhrchen erhalten, die durch konventionelle Filtration mit einem Filter (Porengröße < 0,5 µm) abgetrennt wurden.

Es wurde der Kontaktwinkel der erhaltenen Kohlenstoffnanoröhrchen mittels einer Wilhelmy-Waage nach der sogenannten Washburn-Methode bestimmt. Dabei taucht ein mit Pulver der zu untersuchenden (unmodifizierten oder modifizierten) Partikel gefüllter Glaszylinder in eine Lösung aus dest. Wasser ein und aus der zeitlichen Änderung der Gewichtszunahme in dem Glaszylinder infolge Wasseraufnahme lässt sich der Kontaktwinkel (zu Wasser) berechnen.

Die folgende Tabelle zeigt den so bestimmten Kontaktwinkel für unbehandelte Nanoröhrchen (zum Vergleich) sowie die mit Wasser und Ethanol als Lösungsmittel erhaltenen Kontaktwinkel.

| | **Kontaktwinkel in °** |
|---|---|
| **MWCNT (unmodifiziert)*** | 89,9 |
| **MWCNT (in Wasser)** | 72,9 |
| **MWCNT (in Ethanol)** | 52,8 |

| | |
|---|---|
| * Vergleichsbeispiel | |

Wie die obigen Messungen zeigen, kann durch Variation des für die Umhüllung der Partikel (Nanoröhrchen) verwendeten Lösungsmittels der Kontaktwinkel unter Beibehaltung der übrigen Bedingungen des Atmosphärendruckplasmas gezielt beeinflusst werden.

## Patentansprüche

1. Verfahren zur Modifizierung der Oberfläche von Partikeln in einem Atmosphärendruckplasma, bei dem Partikel (1) in einer Verbindung (2) dispergiert werden, die bei Raumtemperatur und Atmosphärendruck flüssig ist, die Dispersion zerstäubt wird, um umhüllte Partikel zu erhalten, und die umhüllten Partikel einem Atmosphärendruckplasma (3) ausgesetzt werden, in dem die Oberfläche der Partikel modifiziert wird.

2. Verfahren gemäß Anspruch 1, bei dem die mindestens eine Verbindung (2) ein Lösungsmittel oder eine ionische Flüssigkeit ist.

3. Verfahren gemäß Anspruch 2, bei dem das Lösungsmittel Wasser oder ein organisches Lösungsmittel ist.

4. Verfahren gemäß mindestens einem der Ansprüche 1 bis 3, bei dem die mindestens eine Verbindung (2) Wasser oder ein Alkohol ist.

5. Verfahren gemäß mindestens einem der Ansprüche 1 bis 4, bei dem die Dispergierung der Partikel in der mindestens einen Verbindung unter Einwirkung von Ultraschall und/oder durch die Zugabe von Tensid erfolgt.

6. Verfahren gemäß mindestens einem der Ansprüche 1 bis 5, bei dem das Atmosphärendruckplasma (3) durch mindestens eine Plasmadüse (6) erzeugt wird.

7. Verfahren gemäß mindestens einem der Ansprüche 1 bis 6, bei dem die Anregung für das Atmosphärendruckplasma (3) gepulst ist.

8. Verfahren gemäß mindestens einem der Ansprüche 1 bis 7, bei dem das Atmosphärendruckplasma (3) ein relaxierendes Atmosphärendruckplasma ist.

9. Verfahren gemäß mindestens einem der Ansprüche 1 bis 8, bei dem mindestens eine Beschichtungsvorläuferverbindung in das Atmosphärendruckplasma eingespeist wird.

10. Verfahren gemäß mindestens einem der Ansprüche 1 bis 9, bei dem die oberflächenmodifizierten Partikel (7) anschließend von nicht-oberflächenmodifizierten Partikeln (1) abgetrennt werden.

11. Verfahren gemäß Anspruch 10, bei dem die Abtrennung durch die unterschiedliche Sedimentationsgeschwindigkeit der oberflächenmodifizierten und der nicht-oberflächenmodifizierten Partikel in einer Sedimentationsflüssigkeit (8) erfolgt, wobei vorzugsweise die Sedimentationsgeschwindigkeit der nicht-oberflächenmodifizierten Partikel in der Sedimentationsflüssigkeit größer ist als die der oberflächenmodifizierten Partikel.

12. Verfahren gemäß Anspruch 11, bei dem die Sedimentationsflüssigkeit und die mindestens eine Verbindung zur Umhüllung der Partikel identisch sind.

13. Verfahren gemäß Anspruch 11, bei dem die oberflächenmodifizierten Partikel in der Sedimentationsflüssigkeit eine Reaktion mit Reaktanden, die in der Sedimentationsflüssigkeit enthalten sind, eingehen.

14. Zyklischer Prozess zur Modifizierung der Oberfläche von Partikeln in einem Atmosphärendruckplasma, **dadurch gekennzeichnet, dass** er die folgenden Schritte umfasst:
(i) Partikel (1) werden in einem Dispersionsbehälter (9) in mindestens einem Lösungsmittel (2) dispergiert, wobei das Lösungsmittel bei Raumtemperatur und Atmosphärendruck flüssig ist;
(ii) die Dispersion der Partikel (1) wird durch eine Strahlpumpe (4), die mit einen Trägergas betrieben wird, unter Bildung der umhüllten Partikel (1) zerstäubt;
(iii) die umhüllten Partikel werden in ein durch ein Atmosphärendruckplasma erzeugtes Reaktionsvolumen (3) transportiert, in dem ihre Oberfläche modifiziert wird und so oberflächenmodifizierte Partikel (7) erhalten;
(iv) die oberflächenmodifizierten Partikel (7) werden zusammen mit nicht-oberflächenmodifizierten Partikeln (1) in einen Sedimentationsbehälter (10) transportiert, der einen oberen Abfluss (11) und einen unteren Abfluss (12) aufweist, der das mindestens eine Lösungsmittel als Sedimentationslösungsmittel (8) enthält und in dem die nicht-oberflächenmodifizierten Partikel (1) aufgrund ihrer höheren Sedimentationsgeschwindigkeit als die oberflächenmodifizierten Partikel (7) absinken;
(v) oberflächenmodifizierte Partikel (7) werden durch den oberen Abfluss (11) aus dem Sedimentationsbehälter (10) entnommen;
(vi) nicht-oberflächenmodifizierte Partikel (1) werden zusammen mit dem mindestens einen Lösungsmittel über den unteren Abfluss (12) des Sedimentationsbehälters (10) zu Schritt (i) zurückgeführt.

15. Vorrichtung, die folgendes umfasst:
eine Reaktionskammer (5) mit einem Einlass (15) und einem Auslass (16);
eine Atmosphärendruckplasmadüse (6), die zur Erzeugung eines Atmosphärendruckplasmas (3) in der Reaktionskammer mit der Reaktionskammer (5) in Verbindung steht;
eine Strahlpumpe (4) die mit dem Einlass der Reaktionskammer (15) in Verbindung steht, mit einem ersten Anschluss (17) zum Einbringen eines Trägergases und einem zweiten Anschluss (33); und
einen Dispersionsbehälter (9), der mit dem zweiten Anschluss der Strahlpumpe in Verbindung steht.

## Claims

1. Method for modifying the surface of particles in an atmospheric pressure plasma, in which particles (1) are dispersed in a compound (2) which is liquid at room temperature and atmospheric pressure, the dispersion is atomised to obtain coated particles and the coated particles are exposed to an atmospheric pressure plasma (3) in which the surface of the particles is modified.

2. Method according to claim 1, in which the at least one compound (2) is a solvent or an ionic liquid.

3. Method according to claim 2, in which the solvent is water or an organic solvent.

4. Method according to at least one of claims 1 to 3, in which the at least one compound (2) is water or an alcohol.

5. Method according to at least one of claims 1 to 4, in which dispersing of the particles is effected in the at least one compound under the action of ultrasound and/or by the addition of surfactant.

6. Method according to at least one of claims 1 to 5, in which the atmospheric pressure plasma (3) is generated by at least one plasma nozzle (6).

7. Method according to at least one of claims 1 to 6, in which the stimulus for the atmospheric pressure plasma (3) is pulsed.

8. Method according to at least one of claims 1 to 7, in which the atmospheric pressure plasma (3) is a relaxing atmospheric pressure plasma.

9. Method according to at least one of claims 1 to 8, in which at least one coating precursor compound is fed into the atmospheric pressure plasma.

10. Method according to at least one of claims 1 to 9, in which the surface-modified particles (7) are then separated from non-surface-modified particles (1).

11. Method according to claim 10, in which the separation is effected by the different settling rate of the surface-modified and the non-surface-modified particles in a settling liquid (8), wherein preferably the settling rate of the non-surface-modified particles in the settling liquid is greater than that of the surface-modified particles.

12. Method according to claim 11, in which the settling liquid and the at least one compound for coating the particles are identical.

13. Method according to claim 11, in which the surface-modified particles in the settling liquid enter a reaction with reactants which are present in the settling liquid.

14. Cyclic process for modifying the surface of particles in an atmospheric pressure plasma, **characterised in that** it comprises the following steps:
(i) particles (1) are dispersed in at least one solvent (2) in a dispersion container (9), wherein the solvent is liquid at room temperature and atmospheric pressure;
(ii) the dispersion of particles (1) is atomised by a jet pump (4), which is operated using a carrier gas, with formation of the coated particles (1);
(iii) the coated particles are transported to a reaction volume (3) generated by an atmospheric pressure plasma in which their surface is modified and thus surface-modified particles (7) obtained;
(iv) the surface-modified particles (7) are transported together with non-surface-modified particles (1) to a settling container (10), which has an upper drain (11) and a lower drain (12), which contains the at least one solvent as settling solvent (8) and in which the non-surface-modified particles (1) settle due to their higher settling rate than the surface-modified particles (7);
(v) surface-modified particles (7) are removed from the settling container (10) through the upper drain (11);
(vi) non-surface-modified particles (1) are returned to step (i) together with the at least one solvent via the lower drain (12) of the settling container (10).

15. Device which comprises the following:
a reaction chamber (5) having an inlet (15) and an outlet (16);
an atmospheric pressure plasma nozzle (6) which is connected to the reaction chamber (5) to generate an atmospheric pressure plasma (3) in the reaction chamber;
a jet pump (4), which is connected to the inlet of the reaction chamber (15), having a first connection (17) for introducing a carrier gas and a second connection (33); and
a dispersion container (9) which is connected to the second connection of the jet pump.

## Revendications

1. Procédé pour la modification de la surface de particules dans un plasma à pression atmosphérique, pour lequel des particules (1) sont dispersées dans un composé (2) qui est liquide à température ambiante et sous pression atmosphérique, la dispersion est pulvérisée afin de recevoir des particules enveloppées, et les particules enveloppées sont exposées à un plasma à pression atmosphérique (3) dans lequel la surface des particules est modifiée.

2. Procédé selon la revendication 1, pour lequel l'au moins un composé (2) est un solvant ou un liquide ionique.

3. Procédé selon la revendication 2, pour lequel le solvant est de l'eau ou un solvant organique.

4. Procédé selon au moins l'une quelconque des revendications 1 à 3, pour lequel l'au moins un composé (2) est de l'eau ou un alcool.

5. Procédé selon au moins l'une quelconque des revendications 1 à 4, pour lequel la dispersion des particules dans l'au moins un composé est effectuée sous l'action d'ultrason et/ou par l'ajout de tensioactif.

6. Procédé selon au moins l'une quelconque des revendications 1 à 5, pour lequel le plasma à pression atmosphérique (3) est généré par au moins une buse à plasma (6).

7. Procédé selon au moins l'une quelconque des revendications 1 à 6, pour lequel l'excitation pour le plasma à pression atmosphérique (3) est pulsée.

8. Procédé selon au moins l'une quelconque des revendications 1 à 7, pour lequel le plasma à pression atmosphérique (3) est un plasma à pression atmosphérique relaxant.

9. Procédé selon au moins l'une quelconque des revendications 1 à 8, pour lequel au moins un composé précurseur de revêtement est injecté dans le plasma à pression atmosphérique.

10. Procédé selon au moins l'une quelconque des revendications 1 à 9, pour lequel les particules (7) modifiées en surface sont ensuite séparées de particules (1) non modifiées en surface.

11. Procédé selon la revendication 10, pour lequel la séparation est effectuée grâce à la vitesse de sédimentation différente des particules modifiées en surface et des particules non modifiées en surface dans un liquide de sédimentation (8), dans lequel de préférence la vitesse de sédimentation des particules non modifiées en surface dans le liquide de sédimentation est supérieure à celle des particules modifiées en surface.

12. Procédé la revendication 11, pour lequel le liquide de sédimentation et l'au moins un composé pour l'enveloppement des particules sont identiques.

13. Procédé selon la revendication 11, pour lequel les particules modifiées en surface dans le liquide de sédimentation interviennent dans une réaction avec des réactifs qui sont contenus dans le liquide de sédimentation.

14. Processus cyclique pour la modification de la surface de particules dans un plasma à pression atmosphérique, **caractérisé en ce qu'**il comporte les étapes suivantes :
(i) des particules (1) sont dispersées dans un récipient de dispersion (9) dans au moins un solvant (2), dans lequel le solvant est liquide à température ambiante et sous pression atmosphérique ;
(ii) la dispersion des particules (1) est pulvérisée par une pompe à jet (4) qui fonctionne avec un gaz porteur, en formant des particules (1) enveloppées ;
(iii) les particules enveloppées sont transportées dans un volume de réaction (3) généré par un plasma à pression atmosphérique, dans lequel leur surface est modifiée et des particules modifiées en surface (7) sont ainsi obtenues ;
(iv) les particules modifiées en surface (7) sont transportées conjointement avec des particules (1) non modifiées en surface dans un récipient de sédimentation (10) qui présente une sortie supérieure (11) et une sortie inférieure (12), qui contient l'au moins un solvant comme solvant de sédimentation (8) et dans lequel les particules (1) non modifiées en surface descendent en raison de leur vitesse de sédimentation supérieure à celle des particules modifiées en surface (7) ;
(v) des particules modifiées en surface (7) sont retirées par la sortie supérieure (11) du récipient de sédimentation (10) ;
(vi) des particules (1) non modifiées en surface sont ramenées conjointement avec l'au moins un solvant par le biais de la sortie inférieure (12) du récipient de sédimentation (10) à l'étape (i).

15. Dispositif qui comporte ce qui suit :
une chambre de réaction (5) avec une entrée (15) et une sortie (16) ;
une buse à plasma à pression atmosphérique (6) qui est en liaison pour la génération d'un plasma à pression atmosphérique (3) dans la chambre de réaction avec la chambre de réaction (5) ;
une pompe à jet (4) qui est en liaison avec l'entrée de la chambre de réaction (15), avec un premier raccord (17) pour l'introduction d'un gaz porteur et un second raccord (33) ; et
un récipient de dispersion (9) qui est en liaison avec le second raccord de la pompe à jet.
